(19) Europäisches Patentamt
European Patent Office
Office européen des brevets

(11) EP 3 834 692 A1

(12) EUROPEAN PATENT APPLICATION
published in accordance with Art. 153(4) EPC

(43) Date of publication:
16.06.2021 Bulletin 2021/24

(51) Int Cl.:
A47L 9/28 (2006.01)          G05D 1/02 (2020.01)
B25J 11/00 (2006.01)         B25J 9/16 (2006.01)

(21) Application number: 19874262.9

(22) Date of filing: 15.10.2019

(86) International application number:
PCT/KR2019/013526

(87) International publication number:
WO 2020/080803 (23.04.2020 Gazette 2020/17)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 16.10.2018 KR 20180123317

(71) Applicant: Samsung Electronics Co., Ltd.
Suwon-si 16677 (KR)

(72) Inventor: CHANG, Hwan
Suwon-si Gyeonggi-do 16677 (KR)

(74) Representative: Walaski, Jan Filip et al
Venner Shipley LLP
200 Aldersgate
London EC1A 4HD (GB)

(54) ROBOTIC CLEANER AND CONTROLLING METHOD THEREFOR

(57) A robotic cleaner is disclosed. The robotic cleaner comprises: a memory in which is stored information about a certain period of time divided into a plurality of sections on the basis of location-related information of a user obtained during the certain period of time; and a processor configured to determine, on the basis of the information stored in the memory, a section to which a time that a user departure event occurred belongs among the plurality of sections when the user departure event occurs, to control the robotic cleaner to perform cleaning in an operation mode with a preset suction intensity when the determined section is a first section among the plurality of sections, and to control, on the basis of cleaning history information, the cleaning performance of the robotic cleaner when a second section among the plurality of sections starts after a user arrival event occurs, wherein, the first section may be determined to be where a user is absent in a cleaning space in the certain period of time, and the second section may be determined to be where a user is present in the cleaning space in the certain period of time.

FIG. 5

## Description

[Technical Field]

The disclosure relates to a robot cleaner and a controlling method thereof, and more particularly to a robot cleaner for sucking foreign materials such as dirt and dust present on a surface to be cleaned and a controlling method thereof.

[Background Art]

In general, robots have been developed for industrial use and widely used in various industrial fields. Recently, the fields using robots have been expanded further, and thus, the robots are used even in houses, in addition to the medical field or aerospace field.

A typical robot used in house is a robot cleaner. The robot cleaner performs a function of cleaning while travelling an indoor space in a house by itself and sucking foreign materials such as dust.

Meanwhile, in the related art, a user scheduled a cleaning time and the robot cleaner performed a cleaning job at the scheduled time. However, in this case, the robot cleaner performs the cleaning job only at the scheduled time, regardless of life pattern of the user, for example, when the user is absent or present in the cleaning space of a house or an office.

Accordingly, there was a problem that the cleaning of the robot cleaner may cause inconvenience to the user.

[Disclosure]

[Technical Problem]

Therefore, an object of the disclosure is to provide a robot cleaner which performs cleaning depending on whether a user is present in a cleaning space in a certain period of time, and a method for controlling the same.

[Technical Solution]

In accordance with an embodiment of the disclosure for achieving the aforementioned object, there is provided a robot cleaner including a memory configured to store information regarding a plurality of sections divided from a certain period based on location-related information of a user obtained during the certain period, and a processor configured to, based on an going out event of the user occurring, determine a section to which a time when the going out event occurs belongs from among the plurality of sections based on information stored in the memory, based on the determined section being a first section from among the plurality of sections, control the robot cleaner so as to perform cleaning in an operation mode with a preset suction power, and based on a second section starting from among the plurality of sections after a return event of the user occurs, control the cleaning of the robot cleaner based on cleaning history information, in which the first section is a section determined that the user is absent from a cleaning space during the certain period, and the second section is a section determined that the user is present in the cleaning space during the certain period.

The processor may obtain the location-related information of the user during the certain period in each of a plurality of days, and divide the certain period into the plurality of sections based on the obtained location-related information.

The plurality of sections may include the first section, the second section, and a third section, and the first section may be a time section during the certain period, in which a number of days when the user was present in the cleaning space is less than a first threshold value, the second section may be a time section during the certain period, in which the number of days when the user was present in the cleaning space is a second threshold value or more, and the third section may be a time section during the certain period, in which the number of days when the user was present in the cleaning space is the first threshold value or more and less than the second threshold value.

The plurality of sections may further include a third section during the certain period determined that it is unclear whether the user is present in or absent from the cleaning space.

The processor may, based on the return event of the user occurring, determine a section to which a time when the return event occurs belongs from among the plurality of sections based on information stored in the memory, based on the determined section being the first section or the third section, control the robot cleaner so as to maintain a cleaning state of the robot cleaner, and based on the second section starting, control the cleaning of the robot cleaner based on the cleaning history information.

The processor may, based on the return event of the user occurring, determine a section to which a time when the return event occurs belongs from among the plurality of sections based on information stored in the memory, and based on the determined section being the second section, control the cleaning of the robot cleaner based on the cleaning history information.

The processor may calculate an index based on cleaning history information in the second section and the third section, and control the cleaning of the robot cleaner in the second section by comparing the calculated index with a preset threshold value.

The cleaning history information may include at least one of a number of times that the robot cleaner is driven, a number of times that the suction power of the robot cleaner is increased, a number of times that the driving of the robot cleaner is stopped, or a number of times that the suction power of the robot cleaner is reduced.

The processor may, based on the calculated index being a first threshold value or more, control the robot cleaner so as to maintain the cleaning state of the robot cleaner, based on the calculated index being less than the first threshold value and equal to or more than a second threshold value, control the robot cleaner so as to perform the cleaning in an operation mode with a suction power lower than the preset suction power, and based on the calculated index being less than the second threshold value, control the robot cleaner so as to stop the cleaning.

In accordance with another aspect of the disclosure, there is provided a method for controlling a robot cleaner, the method including, based on an going out event of a user occurring, determining a section to which a time when the going out event occurs belongs from among a plurality of sections divided from a certain period based on location-related information of the user obtained during the certain period, based on the determined section being a first section from among the plurality of sections, controlling the robot cleaner so as to perform cleaning in an operation mode with a preset suction power, and based on a second section starting from among the plurality of sections after a return event of the user occurs, controlling the cleaning of the robot cleaner based on cleaning history information, in which the first section is a section determined that the user is absent from a cleaning space during the certain period, and the second section is a section determined that the user is present in the cleaning space during the certain period.

The control method may further include obtaining the location-related information of the user during the certain period in each of a plurality of days, dividing the certain period into the plurality of sections based on the obtained location-related information, and storing information regarding the plurality of divided sections.

The plurality of sections may include the first section, the second section, and a third section, and the first section may be a time section during the certain period, in which the number of days when the user was present in the cleaning space is less than a first threshold value, the second section may be a time section during the certain period, in which the number of days when the user was present in the cleaning space is a second threshold value or more, and the third section may be a time section during the certain period, in which the number of days when the user was present in the cleaning space is the first threshold value or more and less than the second threshold value.

The plurality of sections may further include a third section during the certain period determined that it is unclear whether the user is present in or absent from the cleaning space.

The controlling may include, based on the return event of the user occurring, determining a section to which a time when the return event occurs belongs from among the plurality of sections, based on the determined section being the first section or the third section, controlling the robot cleaner so as to maintain a cleaning state of the robot cleaner, and based on the second section starting, controlling the cleaning of the robot cleaner based on the cleaning history information.

The controlling may include, based on the return event of the user occurring, determining a section to which a time when the return event occurs belongs from among the plurality of sections, and based on the determined section being the second section, controlling the cleaning of the robot cleaner based on the cleaning history information.

The controlling may include calculating an index based on cleaning history information in the second section and the third section, and controlling the cleaning of the robot cleaner in the second section by comparing the calculated index with a preset threshold value.

The cleaning history information may include at least one of the number of times that the robot cleaner is driven, the number of times that the suction power of the robot cleaner is increased, the number of times that the driving of the robot cleaner is stopped, or the number of times that the suction power of the robot cleaner is reduced.

The controlling may include, based on the calculated index being a first threshold value or more, controlling the robot cleaner so as to maintain the cleaning state of the robot cleaner, based on the calculated index being less than the first threshold value and equal to or more than a second threshold value, controlling the robot cleaner so as to perform the cleaning in an operation mode with a suction power lower than the preset suction power, and based on the calculated index being less than the second threshold value, controlling the robot cleaner so as to stop the cleaning.

[Effect of Invention]

According to various embodiments of the disclosure described above, it is possible to efficiently perform cleaning while minimizing an effect on a user due to the cleaning of the robot cleaner.

[Description of Drawings]

FIG. 1 is a diagram illustrating a robot cleaner according to an embodiment;
FIG. 2 is a block diagram illustrating a configuration of the robot cleaner according to an embodiment;
FIG. 3 is a diagram illustrating a method for dividing a certain period into a plurality of sections according to an embodiment;
FIG. 4 is a block diagram illustrating a specific configuration of the robot cleaner according to an embodiment;
FIG. 5 is a flowchart illustrating a cleaning method of a robot cleaner according to an embodiment; and

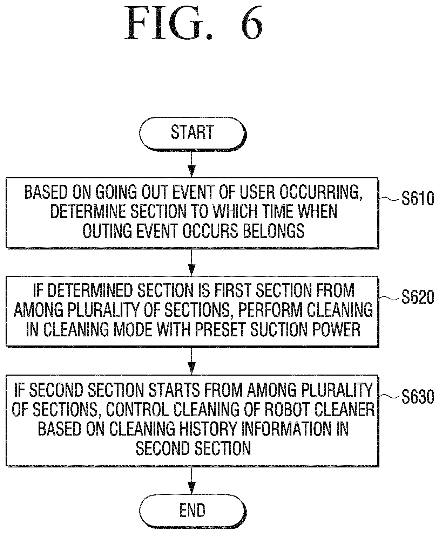

[0031] FIG. 6 is a flowchart illustrating a control method of a robot cleaner according to an embodiment.

[Best Mode]

[0027]     -

[Detailed Description of Exemplary Embodiments]

Hereinafter, various embodiments will be described in detail with reference to the drawings. The embodiments described hereinafter may be modified and practiced in various different aspects. In order to more clearly describe characteristics of the embodiments, detailed description regarding contents which are well known by those skilled in the art, to which the following embodiments belong, will be omitted.

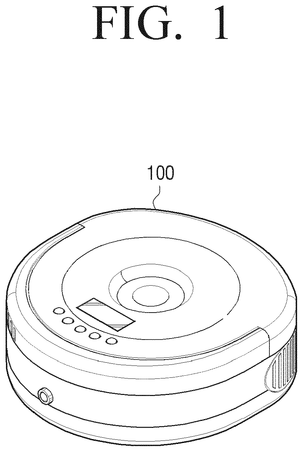

FIG. 1 is a diagram illustrating a robot cleaner according to an embodiment.

In FIG. 1, a robot cleaner 100 implemented in a flat shape is illustrated, but this is merely an example, and a shape and a size of the robot cleaner may be variously implemented.

Referring to FIG. 1, the robot cleaner 100 may refer to a device that is driven by electric power to automatically suck foreign materials such as dirt and dust present on a surface to be cleaned.

For this, the robot cleaner 100 may move on the surface to be cleaned by using wheels installed on left and right sides of a main body. In this case, the wheels may be configured to rotate by a driving unit such as a driving motor or the like.

In addition, the robot cleaner 100 may include a cleaning device for sucking the foreign materials from the surface to be cleaned. In the cleaning device, a cleaning tool (e.g., brush) for collecting the foreign materials may be installed rotatably. In addition, the cleaning device may suck the foreign materials from the surface to be cleaned by generating a suction power through a driving unit such as a suction motor or the like. In this case, the sucked foreign materials may be accommodated in a dust collector provided in the robot cleaner 100.

As described above, the robot cleaner 100 may suck the foreign materials present on the surface to be cleaned while moving on the surface to be cleaned. The configuration of such robot cleaner 100 is the same or similar to a robot cleaner of the related art, and therefore the specific description thereof will be omitted.

Meanwhile, the robot cleaner 100 according to an embodiment of the disclosure may determine periods of time when a user is present in and the user is absent from a cleaning space (e.g., indoor space such as house and office) during a certain period (e.g., a day), and perform cleaning depending on whether the user is present or absent.

Specifically, the robot cleaner 100 may perform the cleaning during the time when the user is absent, and may perform the cleaning in consideration of tolerance of the user regarding the cleaning of the robot cleaner 100 during the time when the user is present. For example, if the tolerance of the user is high, the robot cleaner 100 may perform the cleaning, and if the tolerance of the user is low, the robot cleaner 100 may stop the cleaning or perform the cleaning by changing a cleaning mode.

Therefore, the robot cleaner 100 according to various embodiments of the disclosure may perform the cleaning efficiency while minimizing an effect on the user due to the cleaning.

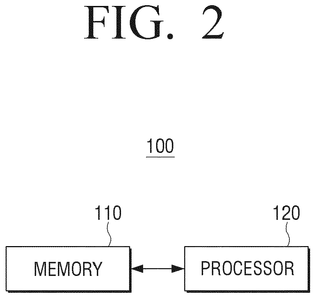

FIG. 2 is a block diagram illustrating a configuration of the robot cleaner according to an embodiment.

Referring to FIG. 2, the robot cleaner 100 may include a memory 110 and a processor 120.

The memory 110 may store various programs and data necessary for operations of the robot cleaner 100.

Specifically, the memory 110 may store information regarding a plurality of sections divided from a certain period based on location-related information of the user obtained during the certain period. This will be described later in detail.

The processor 120 may be connected to the memory 110 to control the robot cleaner 100. Specifically, the processor 120 may be electrically connected to the memory 110 and control general operations and functions of the robot cleaner 100.

First, the processor 120 may divide the certain period into the plurality of sections based on the location-related information of the user obtained during the certain period, and store information regarding the plurality of sections in the memory 110.

In this case, the processor 120 may obtain the location-related information of the user during the certain period in each of a plurality of days, and divide the certain period into the plurality of sections based on the obtained location-related information.

Here, the certain period may be, for example, a day (e.g., 24 hours). In other words, the processor 120 may obtain the location-related information of the user from 0 o'clock to 24 o'clock of each day of the plurality of days. In this case, the processor 120 may obtain the location-related information of the user in every certain time during the certain period, or obtain the location-related information of the user in an arbitrary time during the certain period.

Meanwhile, the location-related information of the user may include information for determining whether the user is present in or absent from the cleaning space.

Accordingly, the processor 120 may determine the time when the user is present in and absent from the cleaning space during the certain period based on the location-related information of the user, and accordingly, divide the certain period into a plurality of time sections.

For example, the location-related information may include access information regarding an access point of a mobile device of the user.

Specifically, the processor 120 may control the robot cleaner 100 so as to access the access point, and obtain the access information regarding the access point of the mobile device of the user from the access point.

For this, the memory 110 may store information regarding a Wi-Fi address of the mobile device of the user, and the processor 120 may obtain information regarding whether the mobile device of the user is accessing the access point by using the information regarding the Wi-Fi address of the mobile device of the user.

For example, the processor 120 may transmit the information regarding the Wi-Fi address of the mobile device of the user to the access point. In this case, the access point may determine whether the mobile device of the user is accessing the access point based on the Wi-Fi address of the mobile device of the user received from the robot cleaner 100, and transmit the information regarding this to the robot cleaner 100. Accordingly, the processor 120 may determine whether the mobile device of the user is accessing the access point.

In addition, the processor 120 may determine the time when the user is present in the cleaning space and the time when the user is absent from the cleaning space during the certain period, based on the information regarding whether the mobile device of the user is accessing the access point.

Specifically, the processor 120 may determine that the time when the mobile device of the user is accessing the access point during the certain period implies that the user is present in the cleaning space, and determine that the time when the mobile device of the user is not accessing the access point implies that the user is absent from the cleaning space.

Accordingly, the processor 120 may determine the time when the user is present in the cleaning space and the time when the user is absent from the cleaning space during the certain period of each day of the plurality of days, and store the information regarding this in the memory 110.

Meanwhile, in addition to the use of the access information regarding the access point as in the above example, if the robot cleaner 100 is connected directly to the mobile device of the user through a method such as Bluetooth, the processor 120 may determine the time when the user is present in the cleaning space and the time when the user is absent from the cleaning space based on the access information of the mobile device of the user with respect to the robot cleaner 100.

Specifically, the processor 120 may determine that the time when the mobile device of the user is connected to the robot cleaner 100 during the certain period implies that the user is present in the cleaning space, and determine that the time when the mobile device of the user is not connected to the robot cleaner 100 implies that the user is absent from the cleaning space.

In addition, the location-related information may include location information of the mobile device of the user (e.g., GPS information, GLONASS information, or the like).

Specifically, the processor 120 may control the robot cleaner 100 so as to communicate with the mobile device of the user, and receive the location information of the mobile device of the user from the mobile device of the user. In this case, the robot cleaner 100 may be connected to the mobile device of the user via a network or connected directly to the mobile device of the user through a method such as Bluetooth.

In addition, the processor 120 may determine the time when the user is present in the cleaning space and the time when the user is absent from the cleaning space during the certain period, based on the location information of the mobile device of the user from the mobile device of the user.

Specifically, the processor 120 may determine that the time when the location information of the mobile device of the user coincides with location information of the cleaning space during the certain period implies that the user is present in the cleaning space, and determine that the time when the location information of the mobile device of the user does not coincide with the location information of the cleaning space implies that the user is absent from the cleaning space. Herein, the location information of the mobile device of the user coinciding with the location information of the cleaning space may imply that the mobile device of the user is located in the cleaning space.

For this, the location information of the cleaning space may be stored in the memory 110. Alternatively, the processor 120 may obtain the location information of the robot cleaner 100 through a sensor of the robot cleaner 100 and set that the location information of the robot cleaner 100 is the location information of the cleaning space.

Accordingly, the processor 120 may determine the time when the user is present in the cleaning space and the time when the user is absent from the cleaning space during the certain period of each day of the plurality of days, and store the information regarding this in the memory 110.

Meanwhile, in the above example, it is described that the robot cleaner 100 is connected to the access point or the mobile device of the user to obtain the location-related information, but this is merely an example. In other words, the processor 120 may obtain the location-related information from an external electronic device (e.g., remote control device for controlling the robot cleaner 100).

For example, the external electronic device may designate the cleaning space as a geo-fence through a geo-fence function, obtain the location-related information of the mobile device of the user based on the location information of the mobile device of the user or network connection of Bluetooth or Wi-Fi, and transmit the obtained location-related information to the robot cleaner 100.

Accordingly, the processor 120 may obtain the location-related information from the external electronic device.

Meanwhile, the processor 120 may divide the certain period into the plurality of sections based on the information stored in the memory 110.

In this case, the plurality of sections may include a first section, a second section, and a third section.

Herein, the first section may be a section determined that the user is absent from the cleaning space during the certain period. In other words, the first section may be a certain absence section and include a time when the user is highly unlikely to be present in the cleaning space during the certain period.

In addition, the second section may be a section determined that the user is present in the cleaning space during the certain period. In other words, the second section may be a certain presence section and include a time when the user is highly likely to be present in the cleaning space.

In addition, the third section may be a section determined that it is uncertain whether the user is present in or absent from the cleaning space during the certain period. In other words, the third section may be an uncertain section and include a time when it is uncertain whether the user is present in or absent from the cleaning space during the certain period.

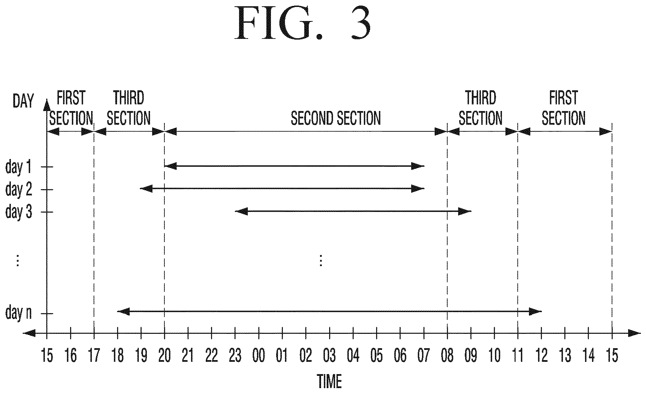

Hereinafter, a method for dividing the certain period into the first to third sections will be described in more detail with reference to FIG. 3.

FIG. 3 is a diagram illustrating an example of information indicating whether the user is present in the cleaning space during the certain period for each day according to an embodiment of the disclosure. Such information may be obtained based on the location-related information of the user and this has been described above.

For example, referring to FIG. 3, during 24 hours of a day 1, the user was present in the cleaning space from 20 o'clock to 7 o'clock and was absent from the cleaning space in the remaining time. During 24 hours of a day 2, the user was present in the cleaning space from 19 o'clock to 7 o'clock and was absent from the cleaning space in the remaining time. During 24 hours of a day 3, the user was present in the cleaning space from 23 o'clock to 9 o'clock and was absent from the cleaning space in the remaining time. During 24 hours of a day n, the user was present in the cleaning space from 18 o'clock to 12 o'clock and was absent from the cleaning space in the remaining time.

Herein, n may be an arbitrary natural number and may be set and changed by the user.

In this case, the processor 120 may compare the number of days when the user was present in the cleaning space with threshold values for each time and divide the certain period into the plurality of sections according to the compared result.

Specifically, the processor 120 may determine a time section during the certain period, in which the number of days when the user was present in the cleaning space is smaller than a first threshold value as the first section, determine a time section during the certain period, in which the number of days when the user was present in the cleaning space is a second threshold value or more as the second section, and determine a time section during the certain period, in which the number of days when the user was present in the cleaning space is equal to or more than the first threshold value and smaller than the second threshold value as the third section. Here, the first and second threshold values may be set in advance and may be set and changed by the user.

In addition, the processor 120 may divide the certain period into the first to third sections according to the determined sections.

For example, in FIG. 3, it is assumed that n is 30. In this case, FIG. 3 may be a diagram illustrating the time when the user is present in the cleaning space and the time when the user is absent from the cleaning space from 0 o'clock to 24 o'clock for each day during 30 days.

In addition, it is assumed that the first threshold value is 5 days and second threshold value is 20 days.

In this case, the processor 120 may determine the time from 11 o'clock to 17 o'clock, during the 24 hours, when the user was present in the cleaning space for less than 5 days as the first section, and determine the time from 20 o'clock to 8 o'clock during 24 hours when the user was present in the cleaning space for 20 days or more as the second section. The processor 120 may determine the time from 17 o'clock to 20 o'clock and from 8 o'clock to 11 o'clock during 24 hours when the user was present in the cleaning space for 5 days or more and less than 20 days as the third section.

Accordingly, the processor 120 may divide the 24 hours into the first section (i.e., time section from 11 o'clock to 17 o'clock), the second section (i.e., time section from 20 o'clock to 8 o'clock), and the third section (i.e., time sections from 17 o'clock to 20 o'clock and from 8 o'clock to 11 o'clock).

Through the above method, the processor 120 may divide the certain period into the plurality of sections and store the information regarding the plurality of divided sections, for example, information regarding the time of each section in the memory 110.

Meanwhile, although it is a time section during the certain period when the number of days when the user was present in the cleaning space is less than the first threshold value, if the corresponding time section is shorter than a preset threshold time, the processor 120 may determine the corresponding time section as the second section. In other words, although the number of days when the user was present in the cleaning space is small, if the period of time when the user was absent from the cleaning space is short, it may be determined that the user is temporarily away from the cleaning space, and the user is highly likely to be present in the cleaning space before and after the corresponding time section. Accordingly, the processor 120 may determine the corresponding time section as the second section.

In addition, although it is a time section during the certain period when the number of days when the user was present in the cleaning space is the second threshold value or more, if the corresponding time section is shorter than the preset threshold time, the processor 120 may determine the corresponding time section as the first section. In other words, although the number of days when the user was present in the cleaning space is great, if the period of time when the user was present in the cleaning space is short, it may be determined that the user is temporarily present in the cleaning space, and there is a high possibility that the user is absent from the cleaning space before and after the corresponding time section. Accordingly, the processor 120 may determine the corresponding time section as the first section.

As described above, the processor 120 may divide the certain period into the plurality of sections in consideration of temporary absence or presence of the user.

Hereinafter, the processor 120 may control the robot cleaner 100 so as to perform the cleaning by using the information stored in the memory 110.

Specifically, if an going out event of the user occurs, the processor 120 may determine a section to which the time when the going out event occurs belongs from among the plurality of sections based on the information stored in the memory 110.

The going out event herein may include an event in which the user leaves the cleaning space.

In this case, the processor 120 may determine whether the going out event occurs through various methods.

For example, if the access of the mobile device of the user with respect to the access point is disconnected, the processor 120 may determine that the going out event occurs. For this, the processor 120 may access the access point to obtain the information regarding whether the access of the mobile device of the user with respect to the access point is disconnected. In another example, if the access of the mobile device of the user with respect to the robot cleaner 100 is disconnected, the processor 120 may determine that the going out event occurs. In still another example, if the location information of the mobile device received from the mobile device of the user does not coincide with the location information of the cleaning space, the processor 120 may determine that the going out event occurs.

In addition, the processor 120 may obtain the information regarding the occurrence of the going out event from the external electronic device (e.g., remote control device for controlling the robot cleaner 100).

For example, the external electronic device may designate the cleaning space as a geo-fence through a geo-fence function, determine whether the mobile device of the user is away from the cleaning space based on the location information of the mobile device of the user or network connection of Bluetooth or Wi-Fi, and transmit the information regarding that to the robot cleaner 100. Accordingly, the processor 120 may determine whether the going out event occurs.

The processor 120 may determine a section to which the time when the going out event occurs from among the plurality of sections based on the information stored in the memory 110.

Specifically, the processor 120 may determine which section from among the first to third sections the time when the going out event occurs belongs to.

For example, in FIG. 3, the processor 120 may determine that the time when the going out event occurs belongs to the first section, if the going out event occurs at 16 o'clock, determine that the time when the going out event occurs belongs to the second section, if the going out event occurs at 22 o'clock, and determine that the time when the going out event occurs belongs to the third section, if the going out event occurs at 18 o'clock.

In addition, the processor 120 may control the robot cleaner 100 so as to perform the cleaning according to the section to which the time when the going out event occurs belongs.

First, if the determined section is the first section from among the plurality of sections, the processor 120 may control the robot cleaner 100 so as to perform the cleaning in an operation mode having a preset suction power.

Here, the preset suction power may be a maximum suction power. Meanwhile, the operation mode may be divided according to the suction power. For example, the operation mode may be divided into 1 to 5, the suction power is the minimum in the operation mode of 1, and the suction power is the maximum in the operation mode of 5. As it goes from the operation mode of 1 to the operation mode of 5, the suction power may become stronger.

In other words, in the first section, the user is highly likely to be absent from the cleaning space, since it is a section determined that the user is absent from the cleaning space. Accordingly, there is no effect on the user, even when the cleaning is performed in the operation mode with the maximum suction power. Thus, the processor 120 may perform the cleaning in the operation mode with the maximum suction power so as to increase the cleaning efficiency.

However, the preset suction power may be set and changed by the user.

Meanwhile, if the section to which the time when the going out event occurs belongs is determined as the second section or the third section, the processor 120 may not start the cleaning job. In this case, when the first section starts according to the elapse of time, the processor 120 may control the robot cleaner 100 so as to perform the cleaning in the operation mode with the preset suction power.

Meanwhile, when the second section starts from among the plurality of sections after a return event of the user occurs, the processor 120 may control the cleaning of the robot cleaner 100 based on cleaning history information.

The return event herein may include an event that the user returns to the cleaning space.

In this case, the processor 120 may determine whether the return event occurs through various methods.

For example, when the mobile device of the user accesses the access point, the processor 120 may determine that the return event occurs. For this, the processor 120 may access the access point and obtain information indicating whether the mobile device of the user has accessed the access point. In another example, when the mobile device of the user is connected to the robot cleaner 100, the processor 120 may determine that the return event occurs. In still another example, if the location information of the mobile device received from the mobile device of the user coincides with the location information of the cleaning space, the processor 120 may determine that the return event occurs.

In addition, the processor 120 may obtain the information regarding the occurrence of the return event from the external electronic device (e.g., remote control device for controlling the robot cleaner 100).

For example, the external electronic device may designate the cleaning space as the geo-fence through the geo-fence function, determine whether the mobile device of the user enters the cleaning space based on the location information of the mobile device of the user or network connection of Bluetooth or Wi-Fi, and transmit the information regarding that to the robot cleaner 100. Accordingly, the processor 120 may determine whether the return event occurs.

In addition, the processor 120 may determine a section to which the time when the return event occurs belongs from among the plurality of sections based on the information stored in the memory 110.

For example, in FIG. 3, the processor 120 may determine that the time when the return event occurs belongs to the first section, if the return event occurs at 16 o'clock, determine that the time when the return event occurs belongs to the second section, if the return event occurs at 22 o'clock, and determine that the time when the return event occurs belongs to the third section, if the return event occurs at 18 o'clock.

In addition, the processor 120 may control the robot cleaner 100 so as to perform the cleaning according to the section to which the time when the return event occurs belongs.

First, if the determined section is the first section or the third section from among the plurality of sections, the processor 120 may control the robot cleaner 100 so as to maintain the cleaning state of the robot cleaner 100. For example, when the robot cleaner 100 performs the cleaning in the operation mode with the preset suction power, the processor 120 may perform the cleaning continuously in the corresponding operation mode.

After that, if it is determined that the second section starts, the processor 120 may control the cleaning of the robot cleaner 100 based on the cleaning history information.

Meanwhile, if the determined section is the second section from among the plurality of sections, the processor 120 may control the cleaning of the robot cleaner 100 based on the cleaning history information.

Hereinafter, a method for controlling the cleaning based on the cleaning history information will be described in detail.

First, the processor 120 may determine the cleaning history information in the second section and the third section.

The cleaning history information herein may include at least one of the number of times that the robot cleaner 100 is driven, the number of times that the suction power of the robot cleaner 100 is increased, the number of times that the driving of the robot cleaner 100 is stopped, or the number of times that the suction power of the robot cleaner 100 is reduced.

For this, the memory 110 may store in advance information regarding the cleaning history of the robot cleaner 100 in the second section and the third section during the certain period.

In other words, the processor 120 may obtain the time when the robot cleaner 100 is driven, the time when the suction power of the robot cleaner 100 is increased, the time when the driving of the robot cleaner 100 is stopped, and the time when the suction power of the robot cleaner 100 is reduced, during the certain period in each of the plurality of days.

The processor 120 may determine the number of times that the robot cleaner 100 is driven, the number of times that the suction power of the robot cleaner 100 is increased, the number of times that the driving of the robot cleaner 100 is stopped, and the number of times that the suction power of the robot cleaner 100 is reduced, in the second section and the third section based on the obtained information, and store the information regarding that in the memory 110.

Accordingly, the processor 120 may obtain the cleaning history information in the second section and the third section from the memory 110.

The processor 120 may calculate an index based on the cleaning history information in the second section and the third section.

Specifically, the processor 120 may calculate an index based on the following mathematical expression.

[Mathematical Expression 1]

$$J = w_1C_1 + w_2C_2 - w_3C_3 - w_4C_4$$

Here, J may represent an index and each of $w_1$, $w_2$, $w_3$, and $w_4$ may be a preset weight and a positive number. $C_1$ represents the number of times that the robot cleaner 100 is driven in the second section and the third section, $C_2$ represents the number of times that the suction power of the robot cleaner 100 is increased in the second section and the third section, $C_3$ represents the number of times that the driving of the robot cleaner 100 is stopped in the second section and the third section, and $C_4$ represents the number of times that the suction power of the robot cleaner 100 is reduced in the second section and the third section.

Meanwhile, the index calculated by the method described above may represent a degree of tolerance of the user.

Specifically, if the user wants to not be disturbed by the cleaning of the robot cleaner 100 while the user is present in the cleaning space, the user may not drive the robot cleaner 100, stop the driving of the robot cleaner 100 being driven, or reduce the suction power of the robot cleaner 100. In such a case, it is determined that the tolerance of the user regarding the cleaning of the robot cleaner 100 is low.

On the other hand, if the user is OK with the cleaning of the robot cleaner 100 while the user is present in the cleaning space, the user may drive the robot cleaner 100, maintain the cleaning of the robot cleaner 100 being driven, or increase the suction power of the robot cleaner 100. In such a case, it is determined that the tolerance of the user regarding the cleaning of the robot cleaner 100 is high.

Thus, according to an embodiment of the disclosure, the index may be calculated based on the mathematical expression 1 so as to indicate the degree of tolerance of the user.

According to the mathematical expression 1, as the number of times that the robot cleaner 100 is driven and the number of times that the suction power of the robot cleaner 100 is increased is small, or as the number of times that the driving of the robot cleaner 100 is stopped and the number of times that the suction power of the robot cleaner 100 is reduced is great, the index may be calculated as a small value. As the number of times that the robot cleaner 100 is driven and the number of times that the suction power of the robot cleaner 100 is increased is great, or as the number of times that the driving of the robot cleaner 100 is stopped and the number of times that the suction power of the robot cleaner 100 is reduced is small, the index may be calculated as a great value.

Meanwhile, the processor 120 may compare the calculated index with the preset threshold value and control the cleaning of the robot cleaner 100 in the second section.

Specifically, if the calculated index is a first threshold value or more (that is, $J_2 \leq J$), the processor 120 may maintain the cleaning state of the robot cleaner 100.

For example, when the robot cleaner 100 performs the cleaning in the operation mode with the preset suction power, the processor 120 may perform the cleaning continuously in the corresponding operation mode.

In addition, if the calculated index is smaller than the first threshold value and equal to or more than the second threshold value (that is, $J_1 \leq J < J_2$), the processor 120 may control the robot cleaner 100 so as to perform the cleaning in the operation with the suction power lower than the preset suction power.

For example, when the robot cleaner 100 performs the cleaning in the operation mode with the preset suction power (e.g., operation mode of 5), the processor 120 may control the robot cleaner 100 so as to perform the cleaning with the suction power (e.g., operation mode of 3) lower than the preset suction power.

In addition, if the calculated index is smaller than second threshold value (that is, $0 \leq J < J_i$), the processor 120 may control the robot cleaner 100 so as to stop the cleaning.

For example, the processor 120 may stop the cleaning of the robot cleaner 100 which is performing the cleaning in the operation mode with the preset suction power.

In this case, the processor 120 may stop the cleaning of the robot cleaner 100 and perform travelling to return to a charging station for charging of the robot cleaner 100.

As described above, according to an embodiment of the disclosure, when the user returns to the cleaning space, the cleaning may be performed continuously, the cleaning may be performed with the reduced suction power, or the cleaning may be stopped in consideration of the degree of tolerance of the user regarding the cleaning of the robot cleaner 100.

As described above, according to various embodiments of the disclosure, it is determined whether the user is present in the cleaning space based on accumulated data, and if the user is absent from the cleaning space, the cleaning may be performed, but if the user enters the cleaning space, the cleaning may be performed continuously, the cleaning may be performed with the reduced suction power, or the cleaning may be stopped in consideration of the degree of tolerance of the user. Therefore, it is possible to perform the cleaning efficiently while minimizing the effect on the user due to the cleaning.

In addition, the user does not need to input time information for the cleaning, since the cleaning is performed based on whether the user is present in the cleaning space. For example, the user may input only information regarding a number of times that the cleaning is performed, for each date, for each day, or for each cycle of the certain period. In this case, if the date for the cleaning comes according to the input information, the processor 120 may control the robot cleaner 100 so as to perform the cleaning according to whether the user is present in the cleaning space.

Meanwhile, in the above example, it is determined whether the user is present based on the cleaning space and the cleaning is performed accordingly, but this is merely an example.

In other words, the processor 120 may divide the cleaning space into a plurality of cleaning areas (e.g., if the cleaning space is a house, divide a house into a room, a living room, and the like), and divide a certain period into a plurality of time sections for each cleaning area. For this, the processor 120 may obtain location-related information of the user during the certain period for each cleaning area, and divide the certain period into the plurality of sections for each cleaning area based on the information.

In addition, the processor 120 may determine whether the user is present for each cleaning area in which the robot cleaner 100 performs the cleaning, and control the cleaning according to the determined result.

Further, in the above example, the index is calculated based on the cleaning space and the cleaning is performed accordingly, but this is merely an example.

In other words, the processor 120 may calculate the index for each cleaning area and control the cleaning by applying the index for each cleaning area in which the robot cleaner 100 performs the cleaning. For this, the processor 120 may obtain information regarding a cleaning history of the robot cleaner 100 during the certain period for each cleaning area.

In addition, in the above example, the cleaning is controlled according to the going out event or the return event of the user, but this is merely an example.

In other words, the processor 120 may control the cleaning of the robot cleaner 100 based on whether the user is present, regardless of the occurrence of the going out event or the return event.

For example, it is assumed that a cleaning job start event occurs. The cleaning job start event herein may occur according to a user command input via a manipulation inputter provided on the remote control device or the robot cleaner 100.

For example, the user may input information regarding the number of times that the cleaning is performed for each date, for each day, or for each cycle of the certain period. If the date for cleaning comes according to the input information, the processor 120 may determine that the cleaning job start event occurs. In another example, the user may input a cleaning start command. If the cleaning start command is input, the processor 120 may determine that the cleaning job start event occurs.

In this case, the processor 120 may determine a section to which the time when the cleaning job start event occurs belongs from among the plurality of sections.

Accordingly, if the determined section is the first section, the processor 120 may control the robot cleaner 100 so as to perform the cleaning in the operation mode with the preset suction power.

However, if the determined section is the second section or the third section, the processor 120 may not start the cleaning job. In this case, if the first section starts with the elapse of time, the processor 120 may control the robot cleaner 100 so as to perform the cleaning in the operation mode with the preset suction power.

After that, if the third section starts while performing the cleaning in the operation mode with the preset suction power, the processor 120 may maintain the cleaning state. If the second section starts while performing the cleaning in the operation mode with the preset suction power, the processor 120 may control the cleaning of the robot cleaner 100 based on the cleaning history information.

After that, if the third section starts while performing the cleaning by the robot cleaner 100 according to the cleaning history information in the second section, the processor 120 may control the robot cleaner 100 so as to maintain the cleaning state of the second section.

In addition, if the first section starts while performing the cleaning in the second section or the third section, the processor 120 may control the robot cleaner 100 so as to perform the cleaning. In this case, the processor 120 may control the robot cleaner 100 so as to perform the cleaning in the operation mode with the preset suction power.

Meanwhile, in the above example, it is described that the robot cleaner 100 performs the cleaning depending on whether the user is present or absent.

However, if the user sets prohibition of the cleaning of the robot cleaner 100 separately, the processor 120 may control the robot cleaner 100 so as to not perform the cleaning job, regardless whether the user is present or absent. The user may set the time when the cleaning is prohibited (e.g., from 6 PM to 8 PM).

For example, if the cleaning job start event occurs, the processor 120 may determine whether the time when the cleaning job start event occurs belongs to a cleaning prohibition time set by the user. Accordingly, if the time when the cleaning job start event occurs belongs to the cleaning prohibition time, the processor 120 may control the robot cleaner 100 so as to not perform the cleaning job, regardless which section from among the first to third sections the time when the cleaning job start event occurs belongs to. If the cleaning prohibition time has completely elapsed, the processor 120 may determine which section from among the first to third sections the elapsed time belongs to, and control the robot cleaner 100 so as to perform the operation accordingly.

In addition, if the cleaning prohibition time set by the user starts while performing the cleaning, the processor 120 may control the robot cleaner 100 so as to stop the cleaning job. If the cleaning prohibition time has completely elapsed, the processor 120 may determine which section from among the first to third sections the elapsed time point belongs to, and control the robot cleaner 100 so as to perform the operation accordingly.

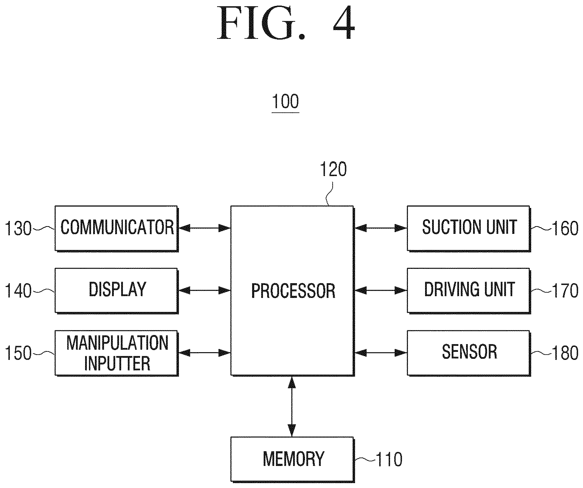

FIG. 4 is a block diagram illustrating a specific configuration of the robot cleaner according to an embodiment.

Referring to FIG. 4, the robot cleaner 100 may include the memory 110, the processor 120, a communicator 130, a display 140, a manipulation inputter 150, a suction unit 160, a driving unit 170, and a sensor 180.

Meanwhile, the memory 110 and the processor 120 perform the same functions as the memory 110 and the processor 120 illustrated in FIG. 2, and therefore the overlapped description regarding these elements will not be repeated.

The memory 110 may store various programs and data necessary for the operation of the robot cleaner 100. In this case, the memory 110 may be implemented as a non-volatile memory, a volatile memory, a flash memory, a hard disk drive (HDD), or a solid state drive (SSD).

In addition, the memory 110 may store cleaning schedule information. The cleaning schedule information may be information regarding the number of times that the cleaning is performed for each date, for each day, or for each cycle of the certain period. For example, the memory 110 may store schedule information indicating that the cleaning is performed once at second of November, schedule information indicating that the cleaning is performed twice on Thursday, schedule information indicating that the cleaning is performed once on every Saturday, or the like. Such cleaning schedule information may be input according to a user command. As described above, according to an embodiment of the disclosure, the cleaning schedule information may be information regarding the number of times that the cleaning is performed at a specific date, rather than the time when the cleaning is performed at a specific date.

In addition, the memory 110 may store map information. The map information may be information indicating a movement path that the robot cleaner 100 will travel in the cleaning space and may be track data in a form of an image or coordinates. Accordingly, the robot cleaner 100 may perform the cleaning while moving the cleaning space according to the map information.

The memory 110 may store cleaning history or the like generated during the cleaning process. The history information may include the number of times that the robot cleaner 100 is driven, the number of times that the driving thereof is stopped, the number of times that the suction power is increased/reduced, cleaning time, information regarding the number of times of charging, information regarding the number of times that the error occurs, each error information, information regarding an uncleaned area, and the like.

The communicator 130 may be an element for connecting the robot cleaner 100 to an external device (specifically, a mobile device, an access point, an external electronic device (e.g., remote control device), or a home server) and may transmit and receive data to and from the external device. In this case, the communicator 130 may be connected by long distance wireless communication (e.g., wireless communication such as GSM, UMTS, LTE, or WiBRO), in addition to the short distance wireless communication (e.g., Bluetooth, Wi-Fi, or Wi-Fi Direct).

The display 140 may display various pieces of information supported by the robot cleaner 100. The display 140 may be a monitor having a small size such as an LCD and may also be implemented as a touch screen capable of also performing a function of the manipulation inputter 150 which will be described later.

The display 140 may display information such as an operation state of the robot cleaner 100 (whether the robot cleaner is in a cleaning mode or a sleeping mode), information regarding cleaning process (e.g., cleaning proceeding time, current cleaning mode (e.g., suction power)), battery information, charging information, whether a dust bag is fully filled with dust, an error state (liquid contact state), and the like. If an error is detected, the display 140 may display the detected error.

The manipulation inputter 150 may include various function keys with which the user may set or select various functions supported by the robot cleaner 100. The manipulation inputter 150 may be implemented as a device such as a plurality of buttons and may also be implemented as a touch screen capable of also performing the function of the display 140.

The manipulation inputter 150 may receive an on/off command of the robot cleaner 100, an on/off command of the function of the robot cleaner 100 (e.g., cleaning start command and cleaning stop command), a command for cleaning schedule information, a command for selection of an operation mode, a command for re-cleaning of an uncleaned area, a command for cleaning of a specific space, a command for cleaning prohibition schedule information, and the like.

The suction unit 160 may suck the foreign materials from a surface to be cleaned of the robot cleaner 100. For this, the suction unit 160 may include a cleaning tool (e.g., brush) for collecting the foreign materials, a driving unit such as a motor for generating a suction power, a dust collector for accommodating the sucked foreign materials, and the like.

Specifically, the suction unit 160 may perform the cleaning operation by sucking the foreign materials on a lower portion while moving or standing. The suction unit 160 may further include an air conditioning unit for conditioning pollutant in the air.

In addition, the suction unit 160 may have a plurality of operation modes. The operation mode may be divided according to the suction power.

The driving unit 170 may move the robot cleaner 100. For this, the driving unit 170 may include a driving unit such as wheels and a motor for driving the wheels. In this case, the driving unit 170 may perform a travelling operation such as moving, stopping, changing a direction, and the like according to a control signal of the processor 120.

The sensor 180 may detect obstacles around the robot cleaner 100. Specifically, the sensor 180 may detect a position of an obstacle around the robot cleaner 100 and a distance from the obstacle using a supersonic sensor, an infrared sensor, an RF sensor, and the like. In addition, the sensor 180 may further include a collision sensor for detecting obstacles through collision with the obstacles.

The sensor 180 may detect an object positioned in front of the robot cleaner 100. Specifically, the sensor 180 may include a camera for capturing an image of the part ahead of the robot cleaner 100 and detect an object through image processing from the image captured by the camera. In addition, the sensor 180 may store a captured image of an object which needs to be sucked or passed in the memory 110.

In addition, the sensor 180 may further include a GPS sensor or a GLONASS sensor for generating position information of the robot cleaner 100.

The processor 120 may perform the control of each element in the robot cleaner 100.

In this case, the processor 120 may perform the cleaning of the robot cleaner 100 depending on whether the user is present.

Meanwhile, the processor 120 may control the driving unit 170 to control a movement direction and a speed of the robot cleaner 100, and control the suction unit 160 to suck the foreign materials on the surface to be cleaned.

Specifically, the processor 120 may control the driving unit 170 so that the robot cleaner 100 moves according to pre-stored map information, and control the suction unit 160 so that the cleaning is performed when the robot cleaner 100 moves or stops.

If there is no pre-stored map information, the processor 120 may control the driving unit 170 so that the robot cleaner 100 moves according to a preset algorithm, and generate map information according to movement track of the robot cleaner 100. When the map information is generated, the processor 120 may store the generated map information in the memory 110.

In addition, when the cleaning job is stopped, the processor 120 may control the driving unit 170 so that the robot cleaner 100 moves to a charging station. In addition, the processor 120 may control the driving unit 160 so that the robot cleaner is moved to the charging station to be charged, if the charging is needed according to the power state of the robot cleaner 100.

Meanwhile, although not illustrated in FIG. 4, the robot cleaner 100 may further include a power supply unit (not illustrated) implemented as a battery for supplying a power to an element included in the robot cleaner 100.

In this case, the processor 120 may provide the power supplied from the power supply unit (not illustrated) to the elements included in the robot cleaner 100.

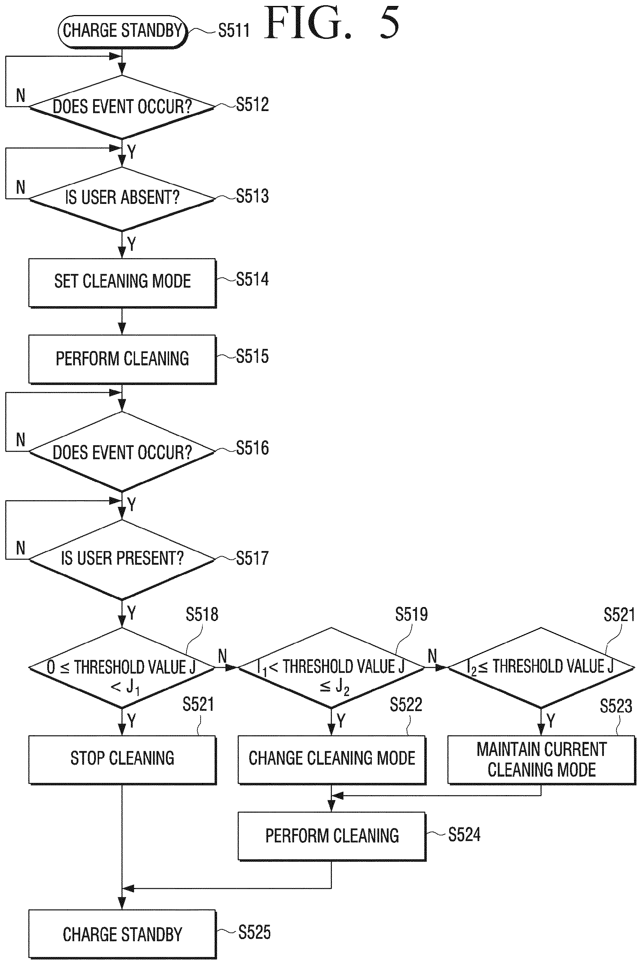

FIG. 5 is a flowchart illustrating a cleaning method of a robot cleaner according to an embodiment.

First, the robot cleaner 100 may be connected to the charging station to perform the charging (S511). In this case, the robot cleaner 100 may be connected to the charging station before starting the cleaning job, even after the charging is completed.

Meanwhile, if the going out event of the user occurs (S512-Y), the processor 120 may determine whether the user is absent (S513).

Specifically, if the time when the going out event occurs is included in the first section from among the plurality of sections or if the first section starts after the going out event occurs, the processor 120 may determine that the user is absent.

When it is determined that the user is absent (S513-Y), the processor 120 may set the cleaning mode (S514) and perform the cleaning (S515).

In this case, the processor 120 may perform the cleaning by setting the cleaning mode of the robot cleaner 100 to an operation mode with a preset suction mode. Here, the preset suction mode may be a mode with a maximum suction power.

Then, if the return event of the user occurs (S515-Y), the processor 120 may determine whether the user is present (S517).

Specifically, if the time when the return event occurs is included in the second section from among the plurality of sections or if the second section starts after the going out event occurs, the processor 120 may determine that the user is present.

If it is determined that the user is present (S517-Y), the processor 120 may calculate an index J and control the cleaning of the robot cleaner 100 by comparing the calculated index with the threshold value.

Specifically, if the index J is smaller than the second threshold value (that is, $0 \leq J < J_1$) (S518-Y), the processor 120 may control the robot cleaner 100 so as to stop the cleaning (S521). In this case, the processor 120 may stop the cleaning and move the robot cleaner 100 to the charging station (S524).

In addition, if the index J is smaller than the first threshold value and equal to or greater than the second threshold value (that is, $J_1 \leq J < J_2$) (S519-Y), the processor 120 may change the cleaning mode (S522). Specifically, the processor 120 may change the cleaning mode of the robot cleaner 100 to the operation mode with the suction power lower than the preset suction power. The processor 120 may control the robot cleaner 100 so as to perform the cleaning in the changed cleaning mode (S524). Then, when the cleaning job is completed, the processor 120 may stop the cleaning and move the robot cleaner 100 to the charging station (S525).

If the index J is equal to or greater than the first threshold value (that is, $J_2 \leq J$) (S520-Y), the processor 120 may maintain the cleaning state of the robot cleaner 100 (S523). Specifically, when the robot cleaner 100 is performing the cleaning in the operation mode with the preset suction power, the processor 120 may maintain the current cleaning mode. The processor 120 may control the robot cleaner 100 so as to perform the cleaning in the changed cleaning mode (S524). Then, when the cleaning job is completed, the processor 120 may stop the cleaning and move the robot cleaner 100 to the charging station (S525).

FIG. 6 is a flowchart illustrating a control method of a robot cleaner according to an embodiment.

First, if the going out event of the user occurs, a section to which the time when the going out event occurs belongs may be determined from among the plurality of sections divided from the certain period based on the location-related information of the user obtained during the certain period (S610).

If the determined section is the first section from among the plurality of sections, the robot cleaner may be controlled so that the cleaning is performed in the operation mode with the preset suction power (S620). The first section may be a section determined that the user is absent from the cleaning space from among the certain period.

In addition, if the second section starts from among the plurality of sections after the return event of the user occurs, the cleaning of the robot cleaner may be controlled based on the cleaning history information (S630). The second section may be a section determined that the user is present in the cleaning space from among the certain period.

Meanwhile, the location-related information of the user may be obtained during the certain period in each of a plurality of days, the certain period may be divided into the plurality of sections based on the obtained location-related information, and the information regarding the plurality of divided sections may be stored.

The plurality of sections may include the first section, the second section, and the third section, and the first section may be a time section during the certain period, in which the number of days when the user was present in the cleaning space is less than the first threshold value, the second section may be a time section during the certain period, in which the number of days when the user was present in the cleaning space is the second threshold value or more, and the third section may be a time section during the certain period, in which the number of days when the user was present in the cleaning space is the first threshold value or more and less than the second threshold value.

The plurality of sections may further include the third section determined that it is unclear whether the user is present in or absent from the cleaning space from among the certain period.

In this case, in the step S630, when the return event of the user occurs, the section to which the time when the return event occurs belongs may be determined from among the plurality of sections, when the determined section is the first section or the third section, the robot cleaner may be controlled to maintain the cleaning state of the robot cleaner, and when it is determined that the second section starts, the cleaning of the robot cleaner may be controlled based on the cleaning history information.

In the step S630, when the return event of the user occurs, the section to which the time when the return event occurs belongs may be determined from among the plurality of sections, and when the determined section is the second section, the cleaning of the robot cleaner may be controlled based on the cleaning history information.

In the step S630, the index may be calculated based on the cleaning history information in the second section and the third section, and the cleaning of the robot cleaner in the second section may be controlled by comparing the calculated index with the preset threshold value.

The cleaning history information may include at least one of the number of times that the robot cleaner is driven, the number of times that the suction power of the robot cleaner is increased, the number of times that the driving of the robot cleaner is stopped, or the number of times that the suction power of the robot cleaner is reduced.

Specifically, in the step S630, if the calculated index is the first threshold value or more, the robot cleaner may be controlled to maintain the cleaning state of the robot cleaner, if the calculated index is less than the first threshold value and equal to or more than the second threshold value, the robot cleaner may be controlled so as to perform the cleaning in the operation mode with the suction power lower than the preset suction power, and if the calculated index is less than the second threshold value, the robot cleaner may be controlled so as to stop the cleaning.

The control method described above may be implemented as a program including an algorithm to be executed on a computer and the program may be stored and provided in a non-transitory computer readable medium.

The non-transitory computer-readable medium is not a medium storing data for a short period of time such as a register, a cache, or a memory, but may refer to a medium that semi-permanently stores data and is readable by a machine. Specifically, the various applications or programs described above may be stored and provided in the non-transitory computer-readable medium such as a CD, a DVD, a hard disk drive, a Blu-ray disc, a USB, a memory card, and a ROM.

While preferred embodiments of the disclosure have been shown and described, the disclosure is not limited to the aforementioned specific embodiments, and it is apparent that various modifications can be made by those having ordinary skill in the technical field to which the disclosure belongs, without departing from the gist of the disclosure as claimed by the appended claims. Also, it is intended that such modifications are not to be interpreted independently from the technical idea or prospect of the disclosure.

[Industrial Applicability]

**[0213]** -

[Sequence List Free Text]

**[0214]** -

## Claims

1. A robot cleaner comprising:

    a memory configured to store information regarding a plurality of sections divided from a certain period based on location-related information of a user obtained during the certain period; and
    a processor configured to,
    based on an going out event of the user occurring, determine a section to which a time when the going out event occurs belongs from among the plurality of sections based on information stored in the memory,
    based on the determined section being a first section from among the plurality of sections, control the robot cleaner so as to perform cleaning in an operation mode with a preset suction power, and
    based on a second section starting from among the plurality of sections after a return event of the user occurs, control the cleaning of the robot cleaner based on cleaning history information,
    wherein the first section is a section determined that the user is absent from a cleaning space during the certain period, and
    wherein the second section is a section determined that the user is present in the cleaning space during the certain period.

2. The robot cleaner according to claim 1, wherein the processor is configured to obtain the location-related information of the user during the certain period in each of a plurality of days, and divide the certain period into the plurality of sections based on the obtained location-related information.

3. The robot cleaner according to claim 2, wherein the plurality of sections comprises the first section, the second section, and a third section,

    wherein the first section is a time section during the certain period, in which a number of days when the user was present in the cleaning space is less than a first threshold value,
    wherein the second section is a time section during the certain period, in which the number of days when the user was present in the cleaning space is a second threshold value or more, and
    wherein the third section is a time section during the certain period, in which the number of days when the user was present in the cleaning space is the first threshold value or more and less than the second threshold value.

4. The robot cleaner according to claim 1, wherein the plurality of sections further comprises a third section determined that it is unclear whether the user is present in or absent from the cleaning space during the certain period.

5. The robot cleaner according to claim 4, wherein the processor is configured to:

    based on the return event of the user occurring, determine a section to which a time when the return event occurs belongs from among the plurality of sections based on information stored in the memory;
    based on the determined section being the first section or the third section, control the robot cleaner so as to maintain a cleaning state of the robot cleaner; and
    based on the second section starting, control the cleaning of the robot cleaner based on the cleaning history information.

6. The robot cleaner according to claim 4, wherein the processor is configured to:

    based on the return event of the user occurring, determine a section to which a time when the return event occurs belongs from among the plurality of sections based on information stored in the memory; and
    based on the determined section being the second section, control the cleaning of the robot cleaner based on the cleaning history information.

7. The robot cleaner according to claim 4, wherein the processor is configured to calculate an index based on cleaning history information in the second section and the third section, and control the cleaning of the robot cleaner in the second section by comparing the calculated index with a preset threshold value.

8. The robot cleaner according to claim 7, wherein the cleaning history information comprises at least one of a number of times that the robot cleaner is driven, a number of times that the suction power of the robot cleaner is increased, a number of times that the driving of the robot cleaner is stopped, or a number of times that the suction power of the robot cleaner is reduced.

9. The robot cleaner according to claim 7, wherein the processor is configured to:

    based on the calculated index being a first threshold value or more, control the robot cleaner so as to maintain the cleaning state of the robot cleaner;

based on the calculated index being less than the first threshold value and equal to or more than a second threshold value, control the robot cleaner so as to perform the cleaning in an operation mode with a suction power lower than the preset suction power; and

based on the calculated index being less than the second threshold value, control the robot cleaner so as to stop the cleaning.

10. A method for controlling a robot cleaner, the method comprising:

based on an going out event of a user occurring, determining a section to which a time when the going out event occurs belongs from among a plurality of sections divided from a certain period based on location-related information of the user obtained during the certain period;

based on the determined section being a first section from among the plurality of sections, controlling the robot cleaner so as to perform cleaning in an operation mode with a preset suction power; and

based on a second section starting from among the plurality of sections after a return event of the user occurs, controlling the cleaning of the robot cleaner based on cleaning history information,

wherein the first section is a section determined that the user is absent from a cleaning space during the certain period, and

wherein the second section is a section determined that the user is present in the cleaning space during the certain period.

11. The method according to claim 10, further comprising:
obtaining the location-related information of the user during the certain period in each of a plurality of days, dividing the certain period into the plurality of sections based on the obtained location-related information, and storing information regarding the plurality of divided sections.

12. The method according to claim 11, wherein the plurality of sections comprises the first section, the second section, and a third section,

wherein the second section is a time section during the certain period, in which a number of days when the user was present in the cleaning space is a second threshold value or more, and

wherein the third section is a time section during the certain period, in which the number of days when the user was present in the cleaning space is the first threshold value or more and less than the second threshold value.

13. The method according to claim 10, wherein the plurality of sections further comprises a third section determined that it is unclear whether the user is present in or absent from the cleaning space during the certain period.

14. The method according to claim 13, wherein the controlling comprises:

based on the return event of the user occurring, determining a section to which a time when the return event occurs belongs from among the plurality of sections;

based on the determined section being the first section or the third section, controlling the robot cleaner so as to maintain a cleaning state of the robot cleaner; and

based on the second section starting, controlling the cleaning of the robot cleaner based on the cleaning history information.

15. The method according to claim 13, wherein the controlling comprises:

based on the return event of the user occurring, determining a section to which a time when the return event occurs belongs from among the plurality of sections; and

based on the determined section being the second section, controlling the cleaning of the robot cleaner based on the cleaning history information.

# FIG. 1

100

# FIG. 2

<u>100</u>

110                  120

| MEMORY | ◄──► | PROCESSOR |

# FIG. 3

# FIG. 4

100

120

| 130 COMMUNICATOR | PROCESSOR | SUCTION UNIT 160 |
| 140 DISPLAY | | DRIVING UNIT 170 |
| 150 MANIPULATION INPUTTER | | SENSOR 180 |

MEMORY 110

# FIG. 5

CHARGE STANDBY — S511

DOES EVENT OCCUR? — S512    N

Y

IS USER ABSENT? — S513    N

Y

SET CLEANING MODE — S514

PERFORM CLEANING — S515

DOES EVENT OCCUR? — S516    N

Y

IS USER PRESENT? — S517    N

Y

S518
$0 \le$ THRESHOLD VALUE J $< J_1$    N

Y  S521

STOP CLEANING

S519
$I_1 <$ THRESHOLD VALUE J $\le J_2$    N

Y  S522

CHANGE CLEANING MODE

S521
$I_2 \le$ THRESHOLD VALUE J

Y  S523

MAINTAIN CURRENT CLEANING MODE

PERFORM CLEANING — S524

CHARGE STANDBY — S525

# FIG. 6

START

BASED ON GOING OUT EVENT OF USER OCCURRING, DETERMINE SECTION TO WHICH TIME WHEN OUTING EVENT OCCURS BELONGS — S610

IF DETERMINED SECTION IS FIRST SECTION FROM AMONG PLURALITY OF SECTIONS, PERFORM CLEANING IN CLEANING MODE WITH PRESET SUCTION POWER — S620

IF SECOND SECTION STARTS FROM AMONG PLURALITY OF SECTIONS, CONTROL CLEANING OF ROBOT CLEANER BASED ON CLEANING HISTORY INFORMATION IN SECOND SECTION — S630

END

## INTERNATIONAL SEARCH REPORT

| International application No. |
| --- |
| **PCT/KR2019/013526** |

**A. CLASSIFICATION OF SUBJECT MATTER**

*A47L 9/28(2006.01)i, G05D 1/02(2006.01)i, B25J 11/00(2006.01)i, B25J 9/16(2006.01)i*

According to International Patent Classification (IPC) or to both national classification and IPC

**B. FIELDS SEARCHED**

Minimum documentation searched (classification system followed by classification symbols)
A47L 9/28; A47L 11/40; B25J 11/00; G05D 1/00; G06F 15/16; G06F 9/44; H04L 12/28; H04L 29/08; G05D 1/02; B25J 9/16

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: robotic vacuum, outing event, cleaning history, vacuum level, index

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2017-0006120 A (KT CORPORATION) 17 January 2017<br>See paragraphs [0054]-[0084]; and figures 1-2. | 1-15 |
| Y | KR 10-2015-0028191 A (SAMSUNG ELECTRONICS CO., LTD.) 13 March 2015<br>See paragraphs [0012]-[0048]; and figure 5. | 1-15 |
| A | US 2016-0374526 A1 (SAMSUNG ELECTRONICS CO., LTD.) 29 December 2016<br>See paragraphs [0046]-[0125]; and figure 7. | 1-15 |
| A | KR 10-2016-0123613 A (LG ELECTRONICS INC.) 26 October 2016<br>See paragraphs [0056]-[0058]; and figures 1-2. | 1-15 |
| A | KR 10-2015-0126106 A (LG ELECTRONICS INC.) 11 November 2015<br>See paragraphs [0094]-[0106]; and figure 6. | 1-15 |

☐ Further documents are listed in the continuation of Box C. ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 28 JANUARY 2020 (28.01.2020) | **29 JANUARY 2020 (29.01.2020)** |

| Name and mailing address of the ISA/KR<br>Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Authorized officer<br><br>Telephone No. |
| --- | --- |

Form PCT/ISA/210 (second sheet) (January 2015)

INTERNATIONAL SEARCH REPORT
Information on patent family members

International application No.

**PCT/KR2019/013526**

| Patent document cited in search report | Publication date | Patent family member | Publication date |
|---|---|---|---|
| KR 10-2017-0006120 A | 17/01/2017 | None | |
| KR 10-2015-0028191 A | 13/03/2015 | CN 105431820 A | 23/03/2016 |
| | | EP 3042280 A1 | 13/07/2016 |
| | | EP 3042280 A4 | 05/04/2017 |
| | | US 10181960 B2 | 15/01/2019 |
| | | US 2015-0066158 A1 | 05/03/2015 |
| | | WO 2015-034295 A1 | 12/03/2015 |
| US 2016-0374526 A1 | 29/12/2016 | EP 3108787 A1 | 28/12/2016 |
| | | KR 10-2017-0001345 A | 04/01/2017 |
| | | US 9943206 B2 | 17/04/2018 |
| KR 10-2016-0123613 A | 26/10/2016 | CN 106037589 A | 26/10/2016 |
| | | EP 3081134 A1 | 19/10/2016 |
| | | EP 3081134 B1 | 31/01/2018 |
| | | US 2015-0375395 A1 | 31/12/2015 |
| | | US 9923389 B2 | 20/03/2018 |
| KR 10-2015-0126106 A | 11/11/2015 | None | |

Form PCT/ISA/210 (patent family annex) (January 2015)